# EUROPÄISCHE PATENTSCHRIFT

(11) **EP 3 259 771 B1**
(45) Veröffentlichungstag und Bekanntmachung des Hinweises auf die Patenterteilung: **22.05.2019**
(21) Anmeldenummer: 15813300.9
(22) Anmeldetag: 08.12.2015
(51) Int. Cl.: H01H 71/40, H01H 9/02, H01H 71/12, H01H 9/54

(54) **SCHUTZSCHALTER UND VERFAHREN ZU DESSEN BETRIEB**
CIRCUIT BREAKER AND METHOD FOR OPERATION THEREOF
DISJONCTEUR DE PROTECTION ET PROCÉDÉ DE FONCTIONNEMENT

(30) Priorität: 16.02.2015 DE 102015001945
(43) Veröffentlichungstag der Anmeldung: 27.12.2017
(73) Patentinhaber: Ellenberger & Poensgen GmbH, 90518 Altdorf (DE)
(72) Erfinder: NAUMANN, Michael, 90537 Feucht (DE); MECKLER, Peter, 91224 Hohenstadt/Pommelsbrunn (DE); FISCHER, Erich, 90518 Altdorf (DE); PAFUMI, Fabio, 91126 Schwabach (DE); REGAHL, Thomas, 90409 Nürnberg (DE); HARRER, Hubert, 91161 Hilpoltstein (DE)
(74) Vertreter: FDST Patentanwälte
(86) Internationale Anmeldenummer: PCT/EP2015/079012
(87) Internationale Veröffentlichungsnummer: WO 2016/131511

(56) Entgegenhaltungen:
- DE-A1- 4 127 412
- US-A- 4 992 904
- US-A1- 2011 208 450

## Beschreibung

Die Erfindung betrifft einen Schutzschalter mit in einem Strompfad zwischen einem Eingangsanschluss und einem Lastanschluss einer Schalteinrichtung mit einem thermischen und/oder magnetischen Auslöser zur Unterbrechung eines den Strompfad umfassenden Stromkreises im Falle eines Überstroms oder Kurzschlusses. Sie betrifft weiter ein Verfahren zum leistungsverlustarmen Betrieb eines derartigen Schutzschalters.

Ein Schutzschalter mit thermischer, magnetischer (elektromagnetischer) oder thermisch-magnetischer Auslösung wird typischerweise als Geräte- oder Anlagenschutz in der Informations- und Kommunikationstechnik sowie für Prozesssteuerungen und andere Anwendungen eingesetzt, die eine zuverlässige Funktionalität bei der Gefahr von Überlast und Kurzschluss erfordern.

Bei einem thermischen Schutzschalter, bei dem die Auslösezeit von der Höhe des Überstroms abhängig ist, wird mit zunehmender Stromstärke ein Bimetall- oder Dehndraht-Element erwärmt, bis der definierte Auslösepunkt erreicht ist. Ein solcher thermischer Schutzschalter ist beispielsweise aus der DE 198 56 707 A1 und EP 0 151 692 A2 bekannt.

Bei einem thermisch-magnetischen Schutzschalter bewirkt die Kombination aus Bimetall- bzw. Dehndraht-Element und einer Magnetspule die Schutzfunktion, wobei der thermische Teil mit einer zeitlich verzögerten Auslösung bei Überlast schützt, während der magnetische Teil zeitlich unverzögert auf hohe Überlast- und Kurzschlussströme anspricht und den fehlerhaften Stromkreis innerhalb weniger Millisekunden abschaltet. Ein derartiger Schutzschalter ist beispielsweise aus der DE 70 39 477 U bekannt.

Ein solcher Schutzschalter verursacht erkanntermaßen eine von den internen Komponenten verursachte Verlustleistung, die in Form von Wärme freigesetzt wird und zu einer Temperaturerhöhung am Einbauort, beispielsweise in einem Schaltschrank, führt. Bei beispielsweise durch weitere Schutzschalter verursachter zunehmender Temperaturerhöhung ist eine Kühlung des Einbauortes erforderlich, da andernfalls die Erwärmung von beispielsweise Leitungen und anderen im Schaltschrank anzutreffenden Komponenten sowie damit einhergehend eine Verringerung der Lebensdauer die Folge ist. Zusätzlich zu dem damit verbundenen Aufwand hinsichtlich der Kühlung sind zudem ein erhöhter Energie- bzw. Strombedarf und mögliche Kondensationseffekte am Einbauort nachteilig. Ein weiterer Schutzschalter vom Stand der Technik ist aus der DE-A-4127412 bekannt.

Der Erfindung liegt die Aufgabe zugrunde, einen möglichst leistungsverlustarm arbeitenden Schutzschalter sowie ein entsprechendes Verfahren zu dessen Betrieb anzugeben.

Bezüglich des Schutzschalters wird diese Aufgabe mit den Merkmalen des Anspruchs 1 und hinsichtlich des Verfahrens mit den Merkmalen des Anspruchs 5 erfindungsgemäß gelöst. Vorteilhafte Ausgestaltungen, Varianten und Weiterbildungen sind Gegenstand der Unteransprüche.

Hierzu ist zumindest eine in den Strompfad geschaltete Funktionskomponente der Schalteinrichtung mittels eines Bypasses gebrückt, der bei Unterschreiten einer Stromschwelle den Laststrom führt, und der bei Überschreiten dieses Schwellwertes (Stromschwelle) gesperrt ist. Die Funktionskomponente kann hierbei ein Bimetall eines thermischen Überstromauslösers oder eine Spule eines elektromagnetischen Auslösers sein.

Wesentlich hierbei ist, dass der Bypass niederohmig im Vergleich zur gebrückten Funktionskomponente des Schutzschalters ist. Der Bypass ist daher vorzugsweise mittels eines der Funktionskomponente parallel geschalteten Schaltelements realisiert, das ein Relais oder ein Halbleiterschalter und/oder ein Reed-Kontakt (Reed-Relais) mit zugeordneter Steuerschaltung sein kann, welche wiederum mit einem Stromsensor verbunden ist.

In vorteilhafter Ausgestaltung erfolgt die Strom- und/oder Spannungsversorgung der Steuerschaltung mittels einer auf dem Prinzip des Energy Harvesting basierenden Funktionskomponente. Diese umfasst geeigneterweise einen Energiewandler zur Umwandlung der von einer schalterinternen oder auch schalterexternen Quelle gelieferten Energie in die Versorgungsspannung bzw. in den Versorgungsstrom für die Steuerschaltung. Zudem umfasst die auf dem Prinzip des Energy Harvesting basierende Funktionskomponente vorzugsweise einen Energiespeicher. Des Weiteren umfasst diese Energy-Harvesting-Funktionskomponente ggf. einen Strom- und/oder Spannungsregler.

Bezüglich des Verfahrens zum verlustarmen Betrieb eines solchen Schutzschalters mit Bypass bzw. Bypassschaltung wird der über den Strompfad, der mit dem jeweiligen Auslöser beschaltet ist, fließende Laststrom erfasst. Der erfasste Laststrom wird mit einem Schwellwert (Stromschwelle) verglichen. Solange dieser Schwellwert bzw. die Stromschwelle unterschritten wird, führt der vergleichsweise niederohmige Bypass den Laststrom bei vergleichsweise geringen Leistungsverlusten. Wird der Schwellwert überschritten, was auf einen möglichen Überstrom- oder Kurzschlussfall hinweist oder zu einem solchen führen kann, wird der Bypass gesperrt und der Laststrom über den in den Strompfad geschalteten Auslöser des Schutzschalters geführt.

Die Energie zur Versorgung der Steuerschaltung der Schalteinrichtung und/oder des in den Bypass geschalteten Schaltelementes erfolgt besonders bevorzugt nach dem Prinzip des Energy Harvesting von einer im Wirkungsbereich des Schutzschalters befindlichen Energiequelle, deren geerntete Energie bedarfsweise in eine Versorgungsspannung und/oder in einen Versorgungsstrom für die Steuerschaltung umgewandelt sowie vorzugsweise gespeichert wird.

Je nach innerhalb des Schutzschalters befindlicher Energiequelle, beispielsweise der Feldenergie des ggf. vorhanden elektromagnetischen Auslösers oder thermischer Energie aus der Wärmeleistung eines ohmschen Widerstandes in einer Steuerschaltung des Schutzschalters oder potentieller Energie aufgrund einer vorhanden Potentialdifferenz an einem elektrischen/elektronischen Bauteil (ohmschen Widerstand) des Schutzschalters, kann als Energiewandler eine Spule (Magnetspule), ein Peltier-Element bzw. ein Potential- oder Spannungswandler eingesetzt und in den Schutzschalter, insbesondere in dessen Steuerschaltung, integriert werden.

Als externe Energiequelle kommen wiederum thermische Energie, beispielsweise aufgrund einer Temperaturdifferenz zwischen zwei benachbarten Teilen, Strahlungsenergie, kinetische Energie oder chemische Energie in Betracht. Zur technischen Realisierung kommen dann geeigneterweise wiederum ein Peltier-Element, eine Solarzelle, ein Piezoelement beziehungsweise eine Batterie zum Einsatz. Unabhängig davon, ob eine interne und/oder eine externe Energiequelle zur Energy Harvesting genutzt wird, dient diese geerntete Energie vorzugsweise lediglich zur Versorgung der elektronischen Steuerschaltung und nicht direkt, sondern somit nur indirekt zur Auslösung des Schutzschalters (Schutzgerätes).

Für die beschriebenen Energieformen, die aus internen oder externen Quellen genutzt werden, muss im Anschluss an die technische Umsetzung als elektrische Energie nicht kontinuierlich zur Verfügung stehen, um die resultierenden Spannungen und/oder Ströme zur Versorgung der elektronischen Steuerschaltung zu erhalten. Vielmehr wird die geerntete Energie beispielsweise mittels eines Kondensators oder einer Induktivität gespeichert, um mögliche Unterbrechungsphasen zu kompensieren. Zumindest im Falle eines Stromflusses über den Strompfad und damit über das jeweilige Funktionselement des Schutzschalters ist über den thermischen Teil eines thermischen Schutzschalters nutzbare Wärmeenergie sowie über den magnetischen beziehungsweise elektromagnetischen Teil eines magnetischen oder thermisch-magnetischen Schutzschalters magnetische beziehungsweise elektromagnetische Feldenergie verfügbar, welche in die erforderliche Leistungsversorgung (Spannung und/oder Strom) für die Steuerschaltung umgewandelt und nutzbar gemacht wird.

Die mit der Erfindung erzielten Vorteile bestehen insbesondere darin, dass einerseits mittels eines niederohmigen Bypasses (Ecopass) zu einer betriebsbedingt elektrische Energie dissidierenden Funktionskomponente eines, insbesondere thermischen und magnetischen, Schutzschalters dieser vergleichsweise leistungsverlustarm und andererseits durch Nutzung des Effektes oder Prinzips des Energy Harvesting besonders energiearm arbeitet. Dabei sind vorzugswiese beide Effekte (Bypass und Energie Harvesting) in Kombination eingesetzt bzw. realisiert.

Nachfolgend werden Ausführungsbeispiele der Erfindung anhand einer Zeichnung näher erläutert. Darin zeigen:
- Fig. 1: schematisch einen thermisch-magnetischen Schutzschalter mit einem mit einer Steuerschaltung beschalteten Halbleiterschalter in einem Bypass zum thermischen Auslöser,
- Fig. 2: in einer Darstellung gemäß Figur 1 einen Schutzschalter mit einem mit einer Steuerschaltung beschalteten Relais im Bypass zum thermischen Auslöser,
- Fig. 3: in einer Darstellung gemäß den Figuren 1 und 2 einen Schutzschalter mit einem Reed-Kontakt im Bypass zum thermischen/magnetischen Auslöser, und
- Fig. 4: in einem Strom-/Zeitdiagramm einen typischen Stromverlauf bei optimalem Bypass- und Auslösebetrieb.

Einander entsprechende Teile sind in allen Figuren mit den gleichen Bezugszeichen versehen.

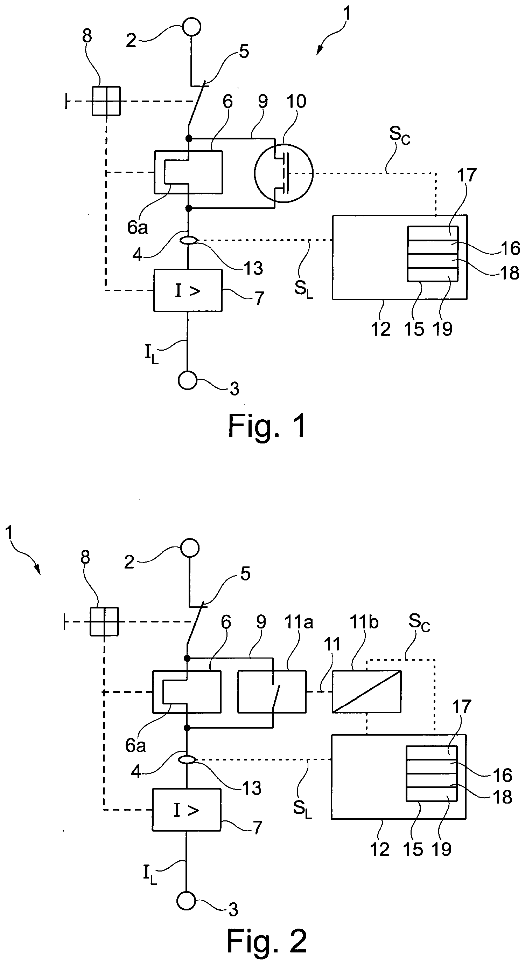

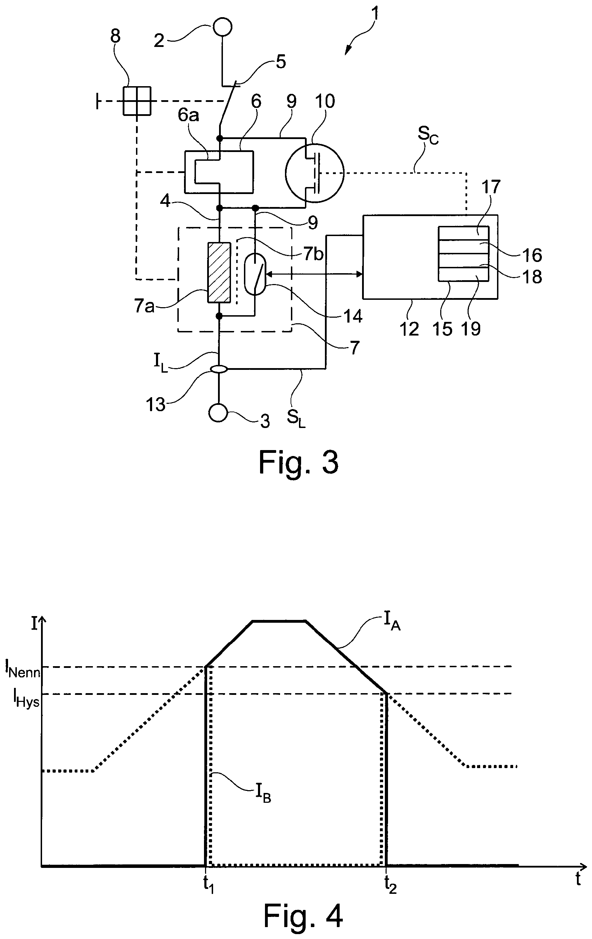

Fig. 1 zeigt schematisch einen Schutzschalter 1 mit thermisch-magnetischer Auslösung und Bypass-Arbeitsweise. Der Schutzschalter 1 umfasst hierzu zwischen einem Eingangsanschluss 2 und einem Lastanschluss 3 einen Strompfad 4 mit einem Trennschalter 5 in Form eines Fest- und Bewegkontaktes. Dem Trennschalter 5 ist innerhalb des Strompfades 4 ein thermischer Auslöser 6 mit oder in Form eines beispielsweise mittels eine Heizdrahtes beheizten Bimetalls 6a nachgeordnet. Diesem thermischen Auslöser 6 wiederum ist ein magnetischer Auslöser 7 in Form einer Magnetspule 7a mit einem Eisenkern 7b (Fig. 3) zur Auslösung eines Schlagankers nachgeordnet. Sowohl der thermische Auslöser 6 als auch der magnetische Auslöser 7 wirken über ein Schaltschloss 8 in Form eines lösbaren Verklinkungsmechanismus auf den Trennschalter 5, um diesen bei Auftreten eines Überstroms oder eines Kurzschlusses zeitverzögert bzw. unverzögert zu öffnen. Die Reihenanordnung des thermischen Auslösers 6 und des magnetischen Auslösers 7 innerhalb des Strompfades 4 kann auch vertauscht sein.

Der thermisch-magnetische Schutzschalter 1 führt somit bei Überlast und Kurzschluss zur Trennung des über den Eingangsanschluss 2 und den Lastanschluss 3 an den Strompfad 4 angeschlossenen Stromkreise. Bei thermischer Auslösung wird die Kraft zum Auslösen des Schaltschlosses 8 aus der Dehnung beispielsweise des Bimetalls des thermischen Auslösers 6 in Folge einer Erwärmung aufgrund ohmscher Heizleistung erlangt. Bei magnetischer Auslösung wirkt die elektromagnetische Kraftwirkung der stromdurchschlossenen Spule des magentischen (elektromagnetischen) Auslösers 7 auf den Schlaganker.

Bei einem gezeigten thermisch-magnetischen Schutzschalter 1 entstehen Wärmeverluste aufgrund des nachfolgend auch als Laststrom I_{L} bezeichneten Betriebsstroms, der über die ohmschen Widerstände fließt, welche sich im Wesentlichen aus dem Bimetall des thermischen Auslösers 6 und der Spule des magnetischen-elektromagnetischen Auslösers 7 zusammensetzen. Fließt über den Strompfad 4 und somit durch den Schutzschalter 1 ein Strom, der unterhalb des jeweiligen Nennstroms I_{N} liegt und somit kleiner als dieser ist, so soll die Verlustleistung reduziert werden, indem der ohmsche Widerstand des Schutzschalters 1 verringert wird. Dies wird dadurch erreicht, dass die funktionale Komponente des jeweiligen Auslösers, hier das Bimetall des thermischen Auslösers 6 und/oder die Spule des magnetischen/elektromagnetischen Auslösers 7 niederohmig überbrückt wird. Dieser Bypass 9 stellt eine niederohmige Verbindung dar, die mit Hilfe eines Schaltelementes realisiert wird.

Während in Fig. 1 als Schaltelement ein Transistor oder Leistungshalbleiter 10 den Bypass 9 bildet beziehungsweise in diesem eingeschaltet ist, ist bei der Ausführungsform des ansonsten gleichartig aufgebauten Schutzschalters 1 gemäß Fig. 2 ein Relaiskontakt 11a eines über eine Relaisspule 11b betriebenen Relais 11 in den Bypass 9 geschaltet. Beiden Schaltelementen 10, 11 ist eine Steuerschaltung 12 zugeordnet, der ein zum aktuellen Laststrom I_{L} entsprechendes oder proportionales Sensorsignal S_{L} zugeführt ist. Dieses wird von einem den aktuellen Laststrom I_{L} im Strompfad 4 erfassenden Stromsensor 13 erzeugt.

Abhängig von der Höhe des erfassten Laststrom I_{L} erzeugt die Steuereinrichtung 12 ein Steuersignal S_{C} zum Betätigen des Schaltelementes 10, 11. In Folge dessen wird der Bypass 9 bei einem Laststrom I_{L}, der einen Schwellwert I_{Nenn} (Fig. 4) unterschreitet, zugeschaltet und somit aktiviert oder durch Öffnen des jeweiligen Schaltelementes 10, 11 der Bypass 9 abgeschaltet beziehungsweise deaktiviert, wenn der erfasste Laststrom I_{L} den Schwellwert I_{Nenn} überschreitet. In diesem Fall wird der Laststrom I_{L} ausschließlich über die Auslöser 6, 7 geführt, so dass diese gegebenenfalls bei einem Überstrom- oder Kurzschluss auslösen.

Bei dem in Fig. 3 schematisch dargestellten Schutzschalter 1 ist als Schaltelement in den Bypass 9 einerseits ein Transistor 10 parallel zum thermischen Auslöser 6 bzw. zu dessen Bimetall 6a und als weiteres Schaltelement ein Reed-Kontakt 14 geschaltet. Dieser ist vorzugsweise in den magnetischen Auslösers 7, d. h. vorzugsweise in den Spulenkörper der Magnetspule 7a integriert. Der Reed-Kontakt 14 wird von der Magnetspule 7a des magnetischen Auslösers 7 des Schutzschalters 1 betätigt und spricht an, wenn ein vorgegebener Grenzwert überschritten wird, vorzugsweise wenn der Laststrom I_{L} einen Grenzwert I'_{N} von beispielsweise 80% des Nennstroms I_{N} erreicht hat (I'_{N} = 0,8 · I_{N}).

Solange der Laststrom I_{L} diesen Grenzwert I'_{N}, der kleiner als der Schwellwert (I_{Nenn}) ist, unterschrittet, wird das Bimetall 6a als Funktionskomponente des thermischen Auslösers 6 mit dem Transistor 10 als Schaltelement kurgeschlossen, währende der Reed-Kontakt 14 geöffnet ist. Dieser wird geschlossen und der das Bimetall 6a überbrückende Transistor wird geöffnet wird, wenn der Laststrom I_{L} den Grenzwert I'_{N} überschreitet.

Die Steuerschaltung 12 fragt den Schaltzustand des Reed-Kontaktes 14 ab. Die Steuerschaltung 12 steuert gleichzeitig den Transistor 10 leitend, der in den Bypass 9 geschaltet ist und den thermischen Auslöser 6 des Schutzschalters 1 bzw. dessen Bimetall 6a kurzschließt. Sobald der Laststrom I_{L} den Grenzwert I'_{N} überschreitet und der Reed-Kontakt 14 anspricht, wird der Transistor 10 über dem thermischen Auslöser 6 bzw. über dessen Bimetall 6a geöffnet und der Laststrom I_{L} fließt ausschließlich über den Strompfad 4, so dass der Schutzschalter 1 normal als thermisch-magnetischer Schutzschalter 1 arbeitet. Sinkt der Laststrom I_{L} erneut unter den Grenzwert I'_{N} = 0,8 I_{Nenn}, so öffnet der Reed-Kontakt 14 und der Prozess läuft rückwärts ab.

Fig. 4 zeigt in einem Strom-Zeitdiagramm I, t einen idealisierten Stromverlauf I_{B} über den Bypass 9 sowie den Stromverlauf (Auslösestrom) I_{A} über die mittels des Bypasses 9 gebrückte Funktionskomponente, vorliegend über das Bimetall des thermischen Auslösers 6. Dieser Stromverlauf I_{A} ist mit einer durchgezogenen Linie veranschaulicht, während der Stromverlauf I_{B} über den Bypass 9 als punktierte Linie dargestellt ist.

Die Steuerschaltung 12 steuert das jeweilige Schaltelement 10, 11 derart in Abhängigkeit vom mittels des Stromsensors 13 erfassten Strom I_{L} an, dass der im Vergleich zum Strompfad 4 niederohmige Bypass 9 aktiviert und das entsprechende Funktionselement 6a, 7a im Strompfad 4 gebrückt ist, bis der nachfolgend auch als Stromschwelle bezeichnete Schwellwert I_{Nenn} erreicht ist, der im Ausführungsbeispiel dem Nennstrom I_{N} des Schutzschalters 1 entspricht. Wird diese Stromschwelle I_{Nenn} beispielweise zu einem Zeitpunkt t₁ erreicht oder überschritten, so wird der Bypass 9 deaktiviert, indem das jeweilige Schaltelement 10, 11, 14 geöffnet wird beziehungsweise öffnet und demzufolge der Laststrom I_{L} allein über den Strompfad 4 fließt.

Damit übernimmt der Schutzschalter 1 seine typische Schutzfunktion und löst im Falle eines Überstroms zeitverzögert thermisch oder im Falle eines Kurzschlusses unverzögert magnetisch/elektromagnetisch aus. Unterschreitet der erfasste Laststrom I_{L} zu einem späteren Zeitpunkt erneut die Stromschwelle I_{Nenn}, so wird mit einer gewissen Hysterese-Stromgrenze I_{Hys} zum Zeitpunkt t₂ der Bypass 9 aktiviert und hierzu das jeweilige Schaltelement 10, 11, 14 durch entsprechende Ansteuerung geschlossen.

Die Strom- und/oder Spannungsversorgung der Steuerschaltung 12 erfolgt vorteilhafterweise mittels einer Funktionskomponente 15 nach dem Prinzip des Energy Harvesting. Diese, im Ausführungseispiel der Steuerschaltung 12 zugeordnete Funktionskomponente 15 umfasst einen Energiewandler 16 zur Umwandlung der von einer schalterinternen oder auch schalterexternen Quelle 17 gelieferten Energie in die Versorgungsspannung bzw. in den Versorgungsstrom für die Steuerschaltung 12. Zudem umfasst die auf dem Prinzip des Energy Harvesting basierende Funktionskomponente 15 einen Strom- und/oder Spannungsregler 18 und einen Energiespeicher 19.

Die Schalteinrichtung kann zur Unterbrechung des den Strompfad 4 umfassenden Stromkreises im Überstrom- oder Kurzschlussfall zusätzlich zum oder anstelle des thermischen oder magnetischen Auslösers auch einen elektronischen Auslöser aufweisen. Die mittels des Bypasses gebrückte Funktionskomponente kann dann ein zur Strommessung dienender Shunt oder ein anderes elektrisches oder elektronisches Bauteil des Schutzschalters sein. Auch ist die Funktionskomponente 15 zur Nutzung bzw. Realisierung des Energy Harvesting in Verbindung mit einem elektronischen Schutzschalter vorteilhaft, indem die geerntete Energie von der schalterinternen oder externen Quelle 17 für die Eigenversorgung der einem solchen elektronischen Schutzschalter üblicherweise zugeordneten Steuerschaltung genutzt und insbesondere mittels des Wandlers 16 in eine Versorgungsspannung und/oder einen Versorgungsstrom umgewandelt sowie ggf. mittels des Strom- bzw. Spannungsregler 18 eingestellt und bedarfsweise mittels des Speichers 19 zwischengespeichert wird.

### Bezugszeichenliste

- 1: Schutzschalter
- 2: Eingangsanschluss
- 3: Lastanschluss
- 4: Strompfad
- 5: Trennschalter
- 6: thermischer Auslöser
- 6a: Bimetall
- 7: magnetischer/elektromagnetischer Auslöser
- 7a: Magnetspule
- 7b: Eisenkern
- 8: Schaltschloss
- 9: Bypass
- 10: Schaltelement/Transistor
- 10': Leistungshalbleiter
- 11: Schaltelement/Relais
- 11a: Relaiskontakt
- 11b: Relaisspule
- 12: Steuerschaltung
- 13: Stromsensor
- 14: Reed-Kontakt
- 15: Funktionskomponente
- 16: Energiewandler
- 17: Energiequelle
- 18: Strom-/Spannungsregler
- 19: Energiespeicher

- I_{Hys}: Hysteresestrom
- I_{L}: Laststrom
- I_{N}: Nennstrom
- l'_{N}: Grenzwert
- I_{Nenn}: Stromschwelle/Schwellwert
- S_{L}: Sensorsignal
- S_{C}: Steuersignal

## Patentansprüche

1. Schutzschalter (1) mit in einem Strompfad (4) zwischen einem Eingangsanschluss (2) und einem Lastanschluss (3) einer Schalteinrichtung (6, 7, 8) mit einem thermischen und/oder magnetischen Auslöser (6, 7) zur Unterbrechung eines den Strompfad (4) umfassenden Stromkreises im Überstrom- oder Kurzschlussfall,
- wobei eine in den Strompfad (4) geschaltete Funktionskomponente (6a, 7a) der Schalteinrichtung (6, 7, 8) mittels eines Bypasses (9) gebrückt ist, der bei Unterschreiten einer Stromschwelle (I_{Nenn}) den mittels eines Stromsensors (13) erfassten Laststrom (I_{L}) führt und bei Überschreiten der Stromschwelle (I_{Nenn}) gesperrt ist, **dadurch gekennzeichnet, dass**
- der Bypass (9) mittels eines der Funktionskomponente (6a, 7a) parallel geschalteten Schaltelements (10, 11, 14) realisiert ist,
- dass das Schaltelement (10, 11, 14) ein Halbleiterschalter oder ein Relais und/ oder ein Reed-Kontakt (14) mit zugeordneter Steuerschaltung (12) ist, welche mit dem Stromsensor (13) verbunden ist, und
- dass die Strom- und/oder Spannungsversorgung der Schalteinrichtung (6, 7, 8) und/oder der Steuerschaltung (12) mittels einer auf dem Prinzip des Energy Harvesting basierenden Funktionskomponente (15) erfolgt.

2. Schutzschalter (1) nach einem der Ansprüche 1 bis 3, **dadurch gekennzeichnet,**
**dass** die auf dem Prinzip des Energy Harvesting basierende Funktionskomponente (15) einen Energiewandler (16) zur Umwandlung der von einer schalterinternen oder -externen Quelle (17) gelieferten Energie in die Versorgungsspannung oder in den Versorgungsstrom für die Steuerschaltung (12) umfasst.

3. Schutzschalter (1) nach einem der Ansprüche 1 bis 2, **dadurch gekennzeichnet,**
**dass** die auf dem Prinzip des Energy Harvesting basierende Funktionskomponente (15) einen Strom- und/oder Spannungsregler (18) umfasst.

4. Schutzschalter (1) nach einem der Ansprüche 1 bis 3, **dadurch gekennzeichnet,**
**dass** die auf dem Prinzip des Energy Harvesting basierende Funktionskomponente (15) einen Energiespeicher (19) umfasst.

5. Verfahren zum verlustarmen Betrieb eines Schutzschalters (1), der eine Schalteinrichtung (6, 7, 8) mit einem mit einem thermischen und/oder magnetischen Auslöser (6, 7) zur Unterbrechung eines Strompfades (4) im Überstrom- oder Kurzschlussfall und einen vergleichsweise niederohmigen Bypasses (9) zu einer in den Strompfad (4) geschalteten Funktionskomponente (6a, 7a) der Schalteinrichtung (6, 7, 8) umfasst,
- wobei der über den Strompfad (4) fließende Laststrom (I_{L}) erfasst und der erfasste Laststrom (I_{L}) mit einem Schwellwert (I_{Nenn}) verglichen wird, bei dessen Unterschreiten der Laststrom (I_{L}) über den Bypass (9) geführt und dieser bei Überschreiten des Schwellwertes (I_{Nenn}) gesperrt wird, **dadurch gekennzeichnet, dass**
die Versorgung einer Steuerschaltung (12) der Schalteinrichtung (1) und/oder eines in den Bypass (9) geschalteten Schaltelementes (10, 11, 14) nach dem Prinzip des Energy Harvesting von einer im Wirkungsbereich des Schutzschalters (1) befindlichen Energiequelle (17) erfolgt und die geerntete Energie in eine Versorgungsspannung oder in einen Versorgungsstrom für die Steuerschaltung (12) umgewandelt wird.

6. Verfahren nach Anspruch 5, **dadurch gekennzeichnet,**
- **dass** die Funktionskomponente (6a) des thermischen Auslösers (6) mit einem Transistor als Schaltelement (10) kurgeschlossen wird, solange der Laststrom (I_{L}) einen Grenzwert (I'_{N}) unterschrittet, der kleiner als der Schwellwert (I_{Nenn}) ist, und
- **dass** ein mit der Funktionskomponente (7a) des elektromagnetischen Auslösers (7) zusammenwirkender Reed-Kontakt als weiteres Schaltelement (14) geschlossen und das die Funktionskomponente (6a) des thermischen Auslösers (6) überbrückende Schaltelement (10) geöffnet wird, wenn der Laststrom (I_{L}) den Grenzwert (I'_{N}) überschreitet.

## Claims

1. Circuit breaker (1) comprising, in a current path (4) between an input connection (2) and a load connection (3), a switching device (6, 7, 8) comprising a thermal and/or magnetic trip device (6, 7) for interrupting a circuit comprising the current path (4) in the event of an overcurrent or short circuit,
- wherein a functional component (6a, 7a) of the switching device (6, 7, 8), said functional component being connected into the current path (4), is bypassed by means of a bypass (9), which conducts the load current (I_{L}) detected by means of a current sensor (13) when a current threshold (I_{rated}) is undershot and is blocked when the current threshold (I_{rated}) is exceeded, **characterized in that**
- the bypass (9) is implemented by means of a switching element (10, 11, 14) connected in parallel with the functional component (6a, 7a),
- the switching element (10, 11, 14) is a semiconductor switch or a relay and/or a reed contact (14) comprising an associated control circuit (12), which is connected to the current sensor (13), and
- the supply of current and/or voltage to the switching device (6, 7, 8) and/or the control circuit (12) is effected by means of a functional component (15) based on the principle of energy harvesting.

2. Circuit breaker (1) according to Claim 1, **characterized in that** the functional component (15) based on the principle of energy harvesting comprises an energy converter (16) for converting the energy supplied by a source (17) inside or outside the switch to the supply voltage or to the supply current for the control circuit (12).

3. Circuit breaker (1) according to one of Claims 1 to 2, **characterized in that** the functional component (15) based on the principle of energy harvesting comprises a current and/or voltage regulator (18).

4. Circuit breaker (1) according to one of Claims 1 to 3, **characterized in that** the functional component (15) based on the principle of energy harvesting comprises an energy store (19) .

5. Method for the low-loss operation of a circuit breaker (1), which comprises a switching device (6, 7, 8) comprising a thermal and/or magnetic trip device (6, 7) for interrupting a current path (4) in the event of an overcurrent or short circuit and a comparatively low-impedance bypass (9) to a functional component (6a, 7a) of the switching device (6, 7, 8), said functional component being connected into the current path (4),
- wherein the load current (I_{L}) flowing via the current path (4) is detected and the detected load current (I_{L}) is compared with a threshold valve (I_{rated}) upon the undershooting of which the load current (I_{L}) is conducted via the bypass (9) and said bypass is blocked when the threshold valve (I_{rated}) is exceeded, **characterized in that** the supply of power to a control circuit (12) of the switching device (6,7,8) and/or a switching element (10, 11, 14) connected into the bypass (9) is effected according to the principle of energy harvesting by an energy source (17) located in the range of action of the circuit breaker (1) and the harvested energy is converted to a supply voltage or to a supply current for the control circuit (12).

6. Method according to Claim 5, **characterized in that**
- the functional component (6a) of the thermal trip device (6) is short-circuited by way of a transistor as switching element (10) as long as the load current (I_{L}) undershoots a limit value (I'_{N}), which is lower than the threshold valve (I_{rated}), and
- a reed contact interacting with the functional component (7a) of the electromagnetic trip device (7) as a further switching element (14) is closed and the switching element (10) bypassing the functional component (6a) of the thermal trip device (6) is opened when the load current (I_{L}) exceeds the limit value (I'_{N}).

## Revendications

1. Disjoncteur de protection (1) comportant, sur un trajet de courant (4) entre une borne d'entrée (2) et une borne de charge (3), un dispositif de commutation (6, 7, 8) pourvu d'un déclencheur thermique et/ou magnétique (6, 7) destiné à couper un circuit de courant comprenant le trajet de courant (4) en cas de surintensité ou de court-circuit,
- dans lequel un composant fonctionnel (6a, 7a) du dispositif de commutation (6, 7, 8) connecté dans le trajet de courant (4) est ponté au moyen d'une dérivation (9) qui conduit le courant de charge (I_{L}) détecté au moyen d'un capteur de courant (13) lorsqu'il s'abaisse en-dessous du seuil de courant (I_{Nenn}) et est bloqué lorsqu'il se situe au-dessus du courant de seuil (I_{Nenn}), **caractérisée en ce que**
- la dérivation (9) est réalisée au moyen d'un élément de commutation (10, 11, 14) connecté en parallèle avec le composant fonctionnel (6a, 7a),
- **en ce que** l'élément de commutation (10, 11, 14) est un commutateur à semi-conducteur ou un relais et/ou un contact à lames (14) muni d'un circuit de commande (12) qui est relié au capteur de courant (13), et
- **en ce que** l'alimentation en courant et/ou en tension du dispositif de commutation (6, 7, 8) et/ou du circuit de commande (12) est effectuée au moyen d'un composant fonctionnel (15) selon le principe de la récupération d'énergie.

2. Disjoncteur de protection (1) selon la revendication 1, **caractérisé en ce que** le composant fonctionnel (15) fondé sur le principe de la récupération d'énergie comprend un convertisseur d'énergie (16) destiné à convertir l'énergie délivrée par une source interne ou externe (17) au disjoncteur en la tension d'alimentation ou en le courant d'alimentation destiné au circuit de commande (12).

3. Disjoncteur de protection (1) selon l'une des revendications 1 à 2, **caractérisé en ce que** le composant fonctionnel (15) fondé sur le principe de la récupération d'énergie comprend un régulateur de courant et/ou de tension (18).

4. Disjoncteur de protection (1) selon l'une des revendications 1 à 3, **caractérisé en ce que** le composant fonctionnel (15) fondé sur le principe de la récupération d'énergie comprend un accumulateur d'énergie (19).

5. Procédé pour le fonctionnement à faible perte d'un disjoncteur de protection (1) qui comprend un dispositif de commutation (6, 7, 8) pourvu d'un déclencheur thermique et/ou magnétique (6, 7) destiné à couper un trajet de courant (4) en cas de surintensité ou de court-circuit, et d'une dérivation présentant une résistance comparativement faible (9) par rapport à un composant fonctionnel (6a, 7a) connecté sur le trajet de courant (4) du dispositif de commutation (6, 7, 8),
- dans lequel le courant de charge (I_{L}) circulant sur le trajet de courant (4) est détecté et le courant de charge (I_{L}) détecté est comparé à une valeur de seuil (I_{Nenn}), et lorsqu'il se situe en-dessous de celle-ci, le courant de charge (I_{L}) est conduit par l'intermédiaire de la dérivation (9) et est bloqué lorsqu'il se situe au-dessus de la valeur de seuil (I_{Nenn}),
**caractérisé en ce que** l'alimentation d'un circuit de commande (12) du dispositif de commutation (6,7,8) et/ou d'un élément de commutation (10, 11, 14) connecté dans la dérivation (9) est effectuée selon le principe de la récupération d'énergie d'une source d'énergie (17) située dans la plage de fonctionnement du disjoncteur de protection (1) et **en ce que** l'énergie collectée est transformée en une tension d'alimentation ou en un courant d'alimentation destiné au circuit de commande (12).

6. Procédé selon la revendication 5, **caractérisé**
- **en ce que** le composant fonctionnel (6a) du déclencheur thermique (6) est court-circuité au moyen d'un transistor en tant qu'élément de commutation (10) tant que le courant de charge (I_{L}) se situe en-dessous d'une valeur de seuil (I'_{N}) inférieure à la valeur de seuil (I_{Nenn}), et
- **en ce qu'**un contact à lames, en tant qu'autre élément de commutation (14), coopérant avec le composant fonctionnel (7a) du déclencheur électromagnétique (7) est fermé et l'élément de commutation (10) pontant le composant fonctionnel (6a) du déclencheur thermique (6) est ouvert lorsque le courant de charge (I_{L}) se situe au-dessus de la valeur de seuil (I'_{N}).
